# FASCICULE DE BREVET EUROPEEN

(11) **EP 4 580 941 B1**
(45) Date de publication et mention de la délivrance du brevet: **03.06.2026**
(21) Numéro de dépôt: 23745542.3
(22) Date de dépôt: 26.07.2023
(51) Int. Cl.: B64D 11/00, B64D 11/06

(54) **LOGEMENT DE CHARGE À INDUCTION POUR UN SIÈGE MUNI D'UN DISPOSITIF DE RETENUE LATÉRAL**
INDUKTIONSLADEGEHÄUSE FÜR EINEN SITZ MIT EINER SEITLICHEN HALTEVORRICHTUNG
INDUCTION CHARGING HOUSING FOR A SEAT, PROVIDED WITH A LATERAL RETAINING DEVICE

(30) Priorité: 31.08.2022 FR 2208704
(43) Date de publication de la demande: 09.07.2025
(73) Titulaire: Safran Seats, 78370 Plaisir (FR)
(72) Inventeur: CAVEREAU, Yann, 77550 Moissy-Cramayel (FR); RUIZ, Oscar, 77550 Moissy-Cramayel (FR); GLAIN, Arthur K., 77550 Moissy-Cramayel (FR)
(74) Mandataire: Marconnet, Sébastien
(86) Numéro de dépôt international: PCT/EP2023/070771
(87) Numéro de publication internationale: WO 2024/046667

(56) Documents cités:
- EP-A1- 3 971 036
- WO-A1-2020/058711
- WO-A1-2020/263266
- KR-Y1- 200 474 200
- US-A1- 2014 183 910
- US-A1- 2015 329 062

## Description

La présente invention porte sur un logement de charge à induction pour un siège muni d'un dispositif de retenue latéral. L'invention trouve une application particulièrement avantageuse, mais non exclusive, avec les unités de sièges de type "classe affaires" et "première classe" d'une cabine d'avion.

De façon connue en soi, une telle unité de siège comporte un siège et une console latérale munie de rangements disposée suivant un côté du siège. En outre, une coque s'étend au moins en partie autour du siège de manière à délimiter un espace autour du passager. Une telle configuration permet de garantir l'intimité du passager.

Le siège offre au passager différentes positions de confort, d'une position "assise" jusqu'à une position "allongée", dans laquelle le siège définit un plan de couchage sensiblement horizontal pour que le passager puisse s'allonger. Des positions intermédiaires de confort sont aussi proposées, telles que la position "relax" dans laquelle un dossier du siège est fortement incliné. Généralement, ces positions intermédiaires sont obtenues par l'inclinaison du dossier pivotant autour d'un axe horizontal et perpendiculaire à un axe d'extension du siège. Le passager peut rester sur le siège lors de transitions entre les différentes positions. Le siège est généralement constitué notamment du dossier et d'une assise et est susceptible de comporter un repose-jambes et/ou un repose-pieds, pouvant être fixes ou liés à une cinématique du siège.

La recharge par induction d'appareils électroniques portatifs, typiquement les téléphones portables, est de plus en plus demandée par les compagnies aériennes pour les sièges d'avion de classe affaires. Le chargeur à induction est généralement intégré sur une face supérieure horizontale de la console formant une table sur laquelle le passager peut poser des objets personnels, des boissons, un plateau repas, ou tout type d'objet que le passager souhaiterait avoir à disposition à proximité lors de son voyage. Toutefois, une telle configuration du chargeur à induction ne garantit pas l'immobilité nécessaire du téléphone portable pour assurer sa recharge. En outre, cela occupe un espace supérieur de la console qui pourrait être utilisé à meilleur escient et n'offre pas automatiquement de vision directe de l'avancement de la charge du téléphone depuis le siège du passager.

Le document WO2020/058711 décrit un dispositif de chargement par induction pour charger un téléphone mobile dans un véhicule. Un support est prévu pour maintenir le téléphone mobile dans une position de charge fixe par rapport au dispositif de charge par induction. Le support comprend plusieurs bras, et plusieurs éléments de sollicitation mobiles entre une position déployée et une position rétractée. Les éléments de sollicitation sont disposés à l'intérieur du support de telle sorte qu'ils sont placés en position rétractée lorsque le téléphone mobile est inséré dans le support et que, dans cette position rétractée, les éléments de sollicitation exercent une force de sollicitation vers l'intérieur sur le téléphone mobile pour le maintenir en position de charge.

Le document EP3971036 décrit un système comprenant un appareil de retenue pour maintenir un dispositif électronique mobile à un siège passager. L'appareil de retenue comprend une plaque de support pour supporter une surface arrière du dispositif électronique mobile. L'appareil de retenue comprend en outre un ensemble de support qui comprend des languettes de support pour soutenir l'extrémité inférieure du dispositif électronique mobile. L'appareil de retenue comprend en outre un ensemble de griffes pour soutenir l'extrémité supérieure du dispositif électronique mobile.

Le document US2014/183910 décrit un élément de maintien mobile en translation à l'extérieur du logement de charge à induction. L'élément de maintien est mobile suivant des glissières réalisées dans une face avant du support dans lequel est réalisé le logement de charge à induction.

Le document US2015/329062 décrit un dispositif de retenue d'un appareil électronique dans l'habitacle d'un véhicule à moteur. Le dispositif de retenue comporte un dispositif de fixation servant à fixer ledit dispositif sur un élément de véhicule, un support servant à recevoir l'appareil, et un dispositif de transfert permettant de déplacer le support dans différentes positions par rapport à l'élément de véhicule. Le dispositif de transfert comporte un élément d'appui situé sur le dispositif de fixation et pourvu d'une première articulation présentant un axe de rotation sensiblement vertical, et un bras pivotant situé à proximité de l'extrémité supérieure de l'élément d'appui et pourvu d'une seconde articulation présentant un axe de rotation sensiblement horizontal et pouvant être relié au support.

Le document WO2020/263266 décrit un support de dispositif électronique portable pour un siège de passager comprenant une plaque de base, une plaque arrière fixée de manière pivotante à la plaque de base, et au moins un bras mobile fixé à la plaque arrière. La plaque arrière peut être réglable par rapport à la plaque de base sur une plage d'environ 0° à 90°.

Le document KR200474200 décrit un socle d'appareil électronique portable comportant une plaque coulissante munie d'une rainure destinée à recevoir un bord inférieur de l'appareil électronique portable. Une face arrière de l'appareil électronique est apte à être supporter par des plots d'appui. Suivant un autre mode de réalisation, deux mâchoires montées sur des organes élastiques sont aptes à coopérer avec deux bords latéraux opposés de l'appareil électronique portable.

L'invention vise à remédier efficacement à ces inconvénients en proposant une unité de siège pour un véhicule de transport comportant:
- un siège comprenant une assise et un dossier,
- un logement de charge à induction pour un appareil électronique portable présentant une orientation verticale,
- ledit logement de charge à induction comportant une face inférieure contre laquelle est destiné à reposer une face inférieure de l'appareil électronique portable, une face supérieure, une face latérale droite, une face latérale gauche, et un fond de logement,
- un chargeur à induction apte à générer un champ magnétique à l'intérieur du logement de charge à induction,
- un dispositif de retenue étant configuré pour venir en appui contre au moins un bord de l'appareil électronique portable pour que ledit appareil électronique portable soit maintenu plaqué contre le fond du logement de charge à induction.

L'invention permet ainsi, grâce à l'intégration d'un logement de charge à induction suivant une orientation verticale, de réaliser une économie d'espace au niveau de la surface de table de la console. L'utilisation du dispositif de retenue permet de garantir la recharge par induction de l'appareil électronique portable lorsque ce dernier présente une orientation verticale. En outre, une telle disposition du logement de charge permet au passager de conserver une vision permanente sur l'appareil électronique portable notamment pour observer l'évolution du niveau de charge de la batterie. L'invention permet également au passager d'avoir accès à l'écran de l'appareil électronique portatif pour en effectuer le déverrouillage et pour l'utiliser si besoin pendant la phase de recharge de la batterie.

Le dispositif de retenue est monté coulissant verticalement depuis la face supérieure du logement de charge à induction de façon à venir en appui contre un bord supérieur de l'appareil électronique portable.

Selon une réalisation de l'invention, le dispositif de retenue présente une face arrière destinée à venir en contact avec le bord supérieur de l'appareil électronique portable formant un angle non nul par rapport à un plan vertical.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
[Fig. 1] La figure 1 est une vue en perspective d'une unité de siège comportant un logement de charge à induction selon la présente invention;
[Fig. 2a] [Fig. 2b] Les figures 2a et 2b sont respectivement des vues en perspective et de côté d'un premier mode de réalisation d'un dispositif selon l'invention de retenue d'un appareil électronique portatif disposé à l'intérieur d'un logement de charge à induction;
[Fig. 3a] [Fig. 3b] [Fig. 3c] Les figures 3a, 3b, et 3c sont respectivement des vues en perspective, de côté, et de dessus d'un exemple non revendiqué d'un dispositif de retenue d'un appareil électronique portatif disposé à l'intérieur d'un logement de charge à induction;
[Fig. 4a] [Fig. 4b] Les figures 4a et 4b sont respectivement des vues de face et de côté d'un exemple non revendiqué du logement de charge à induction ;
[Fig. 5a] [Fig. 5b] [Fig. 5c] [Fig. 5d] Les figures 5a, 5b, 5c et 5d sont respectivement des vues de face et de côté d'un exemple non revendiqué du logement de charge à induction.

Il est à noter que les éléments structurels et/ou fonctionnels communs aux différents modes de réalisation présentent les mêmes références. Ainsi, sauf mention contraire, de tels éléments disposent de propriétés structurelles, dimensionnelles et matérielles identiques.

Par ailleurs, dans la suite de la description, les termes relatifs du type "inférieur", "supérieur", "gauche", "droite", "horizontal", "vertical" sont entendus par référence au sens commun que leur donnerait un passager assis sur un siège en face duquel se trouve un logement de charge à induction selon l'invention.

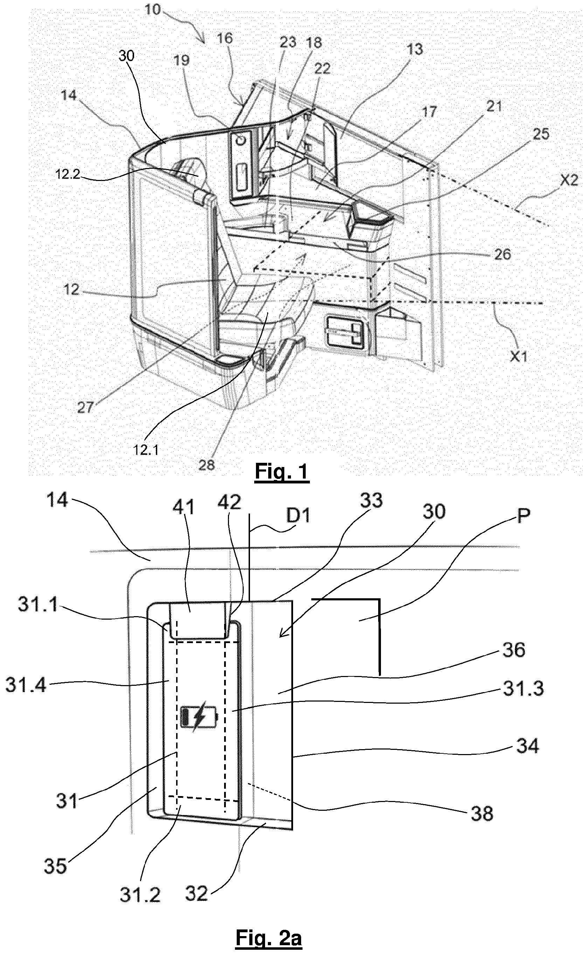

La figure 1 montre une unité de siège 10 comportant un siège 12 associé à une console latérale 13 s'étendant suivant un côté du siège 12.

Plus précisément, le siège 12 comporte une assise 12.1 et un dossier 12.2. Le siège 12 présente un axe d'extension X1 défini par l'intersection entre un plan horizontal et un plan médian vertical du siège 12 correspondant à un plan de symétrie du siège 12. L'axe d'extension X1 du siège 12 pourra former un angle non nul par rapport à une direction parallèle ou confondu avec un axe central de l'avion X2. En l'occurrence, le siège 12 est tourné en direction de l'axe X2. En variante, le siège 12 pourra être tourné dans une direction opposée à l'axe X2. En variante, l'axe X1 du siège s'étend parallèlement à l'axe central de l'avion X2.

Le siège 12 est avantageusement pourvu d'une cinématique lui permettant d'être mobile entre une position "assise", dans laquelle le siège 12 est configuré pour définir une position assise d'un passager, et une position "allongée", dans laquelle l'assise 12.1 et le dossier 12.2 définissent une surface de couchage pour le passager, avantageusement sensiblement horizontale. Des positions intermédiaires de confort sont aussi proposées, telles que la position "relax" dans laquelle un dossier du siège 12 est fortement incliné.

Une coque d'intimité 14 s'étend au moins en partie autour du siège 12 de manière à délimiter un espace autour du passager. La coque d'intimité 14 est réalisée par exemple dans un matériau composite. Une telle configuration permet de garantir l'intimité du passager assis sur le siège 12.

Un écran vidéo 16 d'un système multimédia ou IFE (pour "Inflight Entertainment System" en anglais) pourra être implanté sur une partie arrière de la coque d'intimité 14 de façon à être utilisable par un passager arrière.

La console 13 pourra comporter une paroi supérieure 17 formant une table sur laquelle le passager peut poser des objets ainsi qu'un espace de stockage 18 comportant un ou plusieurs éléments parmi une pochette littérature, un porte-bouteille, ou un minibar. Le choix des rangements est configurable en fonction du souhait de la compagnie aérienne. La console 13 pourra également comporter une liseuse 19 destinée à orienter un éclairage en direction du siège 12.

Une cavité 21 est située sous la paroi supérieure 17. La cavité 21 est ouverte latéralement en direction du siège 12. En outre, une face horizontale 22 de la console 13 a notamment une fonction d'accoudoir. A cet effet, la face horizontale 22 pourra présenter localement une forme de manchette incurvée 23 épousant la forme d'une partie du bras du passager.

La console 13 comporte également une unité de contrôle 25 du siège 12 et de ses composants annexes (dite "PCU" pour "Passenger Control Unit" en anglais). L'unité de contrôle 25 permet notamment au passager de commander la sélection d'une position du siège 12 ainsi que les composants annexes, tels qu'un système vidéo, un dispositif de chauffage, un système d'ambiance lumineuse ou tout autre composant annexe pouvant être intégré au siège 12.

Afin de permettre l'allongement du passager, la console 13 pourra comporter un espace creux 27 vu par transparence sur la figure 1 dans lequel est disposé un ottoman 28. L'ottoman 28 comporte une face horizontale formant un repose-pieds sur lequel un passager arrière pourra poser ses pieds lorsque le siège 12 se trouve en position "allongée".

L'unité de siège 10 pourra également comporter classiquement une tablette repas 26 mobile entre une position stockée (correspondant à celle représentée sur la figure 1) dans laquelle la tablette repas 26 se trouve à l'intérieur d'un logement ménagé dans la console 13 et une position déployée dans laquelle la tablette repas 26 se situe à l'extérieur du logement pour permettre au passager d'y poser un plateau repas.

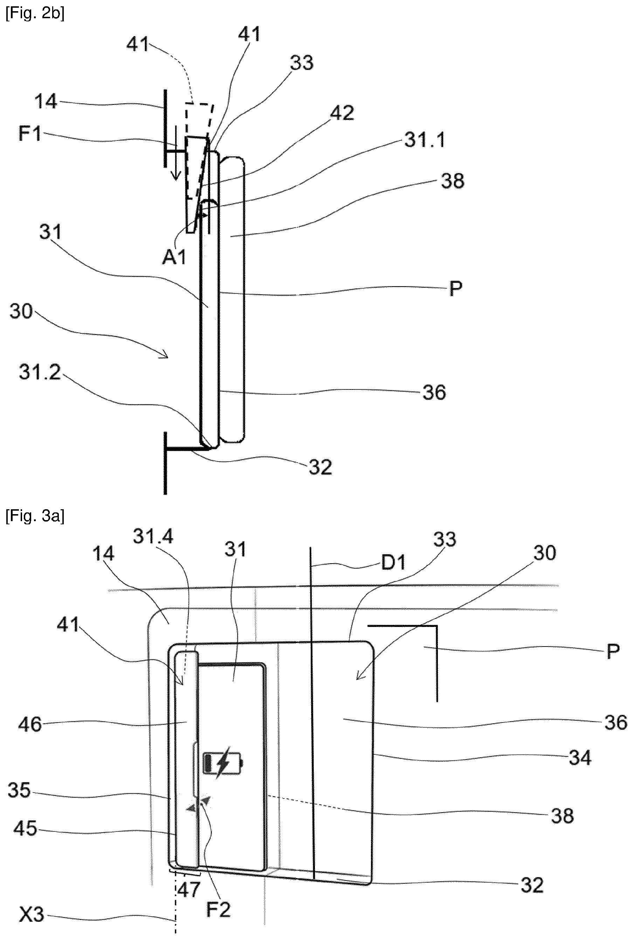

Comme on peut le voir sur les figures 2a et 2b, l'unité de siège 10 comporte en outre un logement de charge à induction 30 pour un appareil électronique portable 31.

L'appareil électronique portable 31 comporte un bord supérieur 31.1, un bord inférieur 31.2, un bord droit 31.3, et un bord gauche 31.4. Chaque bord 31.1-31.4 s'étend suivant une bande longitudinale de quelques millimètres de largeur sur la face avant de l'appareil électronique portable 31. La face avant de l'appareil électronique portable 31 correspond à la face de l'écran de l'appareil électronique portable 31. Les bords 31.1, 31.2, 31.3, 31.4 sont ainsi des bords d'une face avant de l'appareil électronique portable 31.

Plus précisément, le bord supérieur 31.1 s'étend longitudinalement horizontalement du côté haut de l'appareil électronique portable 31 lorsque ce dernier est disposé à l'intérieur du logement de charge à induction 30 et suivant une largeur ayant une dimension inférieure à 30mm, de préférence inférieure à 20mm. Le bord inférieur 31.2 s'étend longitudinalement horizontalement du côté bas de l'appareil électronique portable 31 lorsque ce dernier est disposé à l'intérieur du logement de charge à induction 30 et suivant une largeur ayant une dimension inférieure à 30mm, de préférence inférieure à 20mm. Le bord droit 31.3 s'étend longitudinalement verticalement du côté droit de l'appareil électronique portable 31 lorsque ce dernier est disposé à l'intérieur du logement de charge à induction 30 et suivant une largeur ayant une dimension inférieure à 30mm, de préférence inférieure à 20mm. Le bord gauche 31.4 s'étend longitudinalement verticalement du côté gauche de l'appareil électronique portable 31 lorsque ce dernier est disposé à l'intérieur du logement de charge à induction 30 et suivant une largeur ayant une dimension inférieure à 30mm, de préférence inférieure à 20mm. Un dispositif de retenue 41 décrit plus en détails ci-après pourra venir en appui sur tout ou partie d'un bord correspondant.

L'appareil électronique portable 31 pourra prendre la forme d'un téléphone portable, d'une tablette numérique, ou d'un ordinateur portable. Dans la suite de la description, il est fait référence à un téléphone portable à titre d'exemple mais il est clair que ce téléphone portable pourrait être remplacé par tout autre appareil électronique portable susceptible d'être rechargé par induction.

Le logement de charge à induction 30 est situé à l'arrière du dossier 12.2. En l'occurrence, le logement de charge à induction 30 est réalisé dans la face arrière de la coque d'intimité 14. Alternativement, le logement de charge à induction 30 pourra être réalisé dans la face arrière du dossier 12.2.

Le logement de charge à induction 30 comporte une face inférieure 32 contre laquelle est destiné à reposer une face inférieure du téléphone portable 31, une face supérieure 33, une face latérale droite 34, une face latérale gauche 35, et un fond de logement 36. Le fond 36 est situé en retrait par rapport à la face arrière de la coque d'intimité 14 ou le cas échéant du dossier 12.2. Les faces 32, 33, 34, 35 s'étendent perpendiculairement par rapport au fond 36.

Le logement de charge à induction 30 présente une orientation verticale, de sorte que le fond 36 du logement de charge à induction 30 s'étend dans un plan vertical P. Le logement de charge à induction 30 est ainsi ouvert vers l'extérieur suivant une direction horizontale. Avantageusement, le logement de charge à induction 30 présente une direction d'allongement longitudinale D1 s'étendant suivant une direction verticale. Alternativement, la direction d'allongement longitudinale D1 peut s'étendre selon une direction horizontale.

Un chargeur à induction 38 est apte à générer un champ magnétique à l'intérieur du logement de charge à induction 30. L'action de ce champ magnétique entraîne l'apparition d'un courant de recharge d'une batterie à l'intérieur du téléphone portable 31 muni d'une bobine à cet effet. Le chargeur à induction 38 est avantageusement disposé derrière le fond 36 du logement de charge à induction 30. Alternativement, le chargeur à induction 38 constitue au moins une portion, voire la totalité, du fond 36. Ainsi, lorsque le téléphone portable 31 est plaqué contre le fond 36 du logement 30, la recharge de la batterie du téléphone portable 31 peut être effectuée sans contact par l'intermédiaire du chargeur à induction 38.

Un dispositif de retenue 41 est configuré pour venir en appui contre au moins un bord du téléphone portable 31, de sorte que ledit téléphone portable 31 est maintenu plaqué contre le fond 36 du logement de charge à induction 30 derrière lequel est disposé le chargeur à induction 38.

Dans le mode de réalisation des figures 2a et 2b, le dispositif de retenue 41 est monté coulissant verticalement depuis la face supérieure 33 du logement de charge à induction 30 de façon à venir en appui contre le bord supérieur 31.1 du téléphone portable 31. Le dispositif de retenue 41 est apte à coulisser à l'intérieur d'une ouverture réalisée à l'intérieur de la face supérieure 33 du logement de charge à induction 30.

Le dispositif de retenue 41 présente une face arrière 42 destinée à venir en contact avec le bord supérieur 31.1 du téléphone portable 31 formant un angle A1 non nul par rapport à un plan vertical. L'angle A1 est par exemple de l'ordre de 5 degrés. Le dispositif de retenue 41 pourra présenter une forme de cale biseautée ayant une section trapézoïdale ou triangulaire.

Le dispositif de retenue 41 est mobile entre une position ouverte représentée en pointillée dans laquelle ledit dispositif de retenue 41 est dégagé du téléphone portable 31 et une position fermée dans laquelle le dispositif de retenue 41 vient en appui contre le bord supérieur 31.1 du téléphone portable 31 pour plaquer ledit téléphone portable 31 contre le fond 36 du logement de charge à induction 30.

En position ouverte, une longueur du dispositif de retenue 41 s'étendant à l'intérieur du logement de charge à induction 30 est comprise entre 15mm et 25mm et vaut de préférence de l'ordre de 20mm. En position fermée, le dispositif de retenue 41 peut présenter une longueur déployée à l'intérieur du logement de charge à induction 30 mesurée depuis la face 33 comprise entre 40mm et 60mm et valant de préférence jusqu'à 50mm.

Le réglage en position du dispositif de retenue 41 suivant la direction verticale pourra être effectué par gravité et friction. Alternativement, il est possible d'intégrer un ressort sollicitant le dispositif de retenue 41 contre le bord supérieur 31.1 du téléphone portable 31. La face arrière 42 inclinée ainsi que le coulissement vertical permettent au dispositif de retenue 41 de s'adapter aisément aux variations de hauteur et d'épaisseur du téléphone portable 31 en fonction des modèles.

Afin d'installer son téléphone portable 31 à l'intérieur du logement de charge, le passager tire le dispositif de retenue 41 vers le haut pour le faire passer en position ouverte et ainsi dégager l'accès au fond 36 du logement 30. Le passager peut alors positionner son téléphone portable 31 à l'intérieur du logement de charge à induction 30. En relâchant le dispositif de retenue 41, la cale du dispositif de retenue 41 descend suivant la flèche F1 par gravité ou par l'action du ressort de rappel de façon à venir en appui contre le bord supérieur 31.1 du téléphone portable 31. Cela a pour effet de maintenir plaqué le téléphone portable 31 contre le fond 36 du logement de charge à induction 30 et donc contre le chargeur à induction 38.

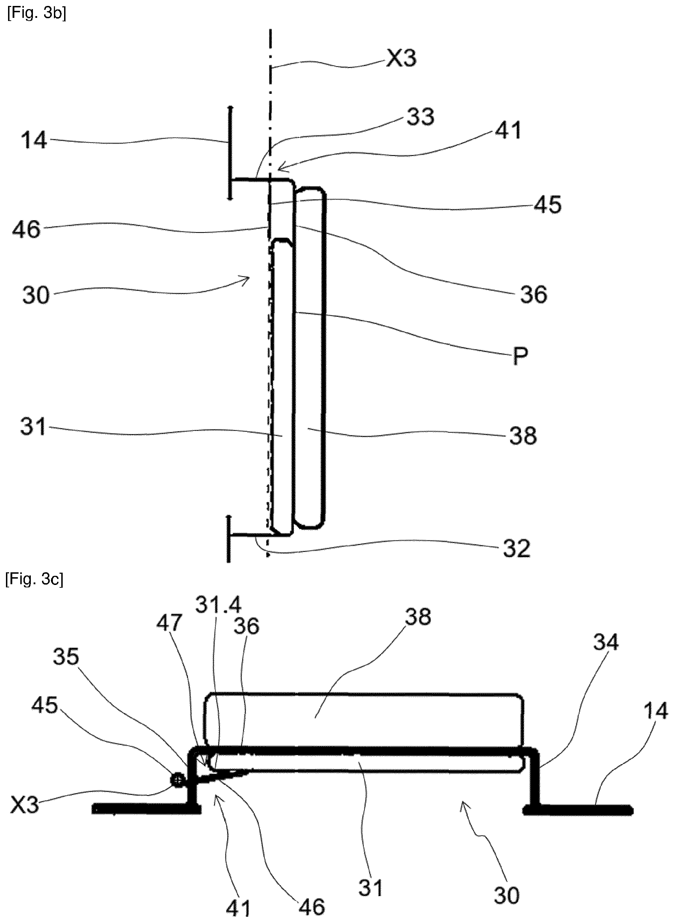

Dans un exemple non revendiqué illustré aux figures 3a, 3b et 3c, le dispositif de retenue 41 est mobile en rotation par rapport au fond 36 autour d'une charnière à ressort 45 suivant un axe vertical X3. La rotation du dispositif de retenue 41 est illustrée par la flèche F2 sur la figure 3a.

Le dispositif de retenue 41 comporte une plaque allongée 46 s'étendant verticalement suivant une bande latérale 47 du logement de charge à induction 30. En l'occurrence, le dispositif de retenue 41 occupe une bande latérale 47 disposée du côté gauche du logement de charge à induction 30. La bande latérale 47 s'étend longitudinalement suivant une direction verticale et suivant une largeur de quelques millimètres, notamment inférieure à 30mm. Alternativement, la bande latérale peut être disposée du côté droit du logement de charge à induction 30. La charnière à ressort 45 pourra être décalée à l'intérieur d'un volume interne délimité par la coque d'intimité 14 par rapport à la face latérale droite 34 ou la face latérale gauche 35 dans laquelle est intégré le dispositif de retenue 41.

La plaque allongée 46 présente de préférence une largeur comprise entre 10mm et 25mm et vaut de préférence de l'ordre de 20mm de largeur. Le dispositif de retenue 41 s'étend de préférence verticalement suivant toute une hauteur du logement de charge à induction 30. Alternativement, le dispositif de retenue 41 pourra s'étendre suivant une portion de la hauteur du logement uniquement.

Le dispositif de retenue 41 est mobile entre une position ouverte dans laquelle la barre allongée 46 est éloignée par rapport au fond 36 du logement de charge à induction 30 pour permettre une insertion du téléphone portable 31 dans l'espace s'étendant entre la barre allongée 46 et le fond 36 du logement de charge à induction 30; et une position fermée dans laquelle le dispositif de retenue 41 vient en appui contre le bord gauche 31.4 (alternativement le bord droit 31.3) du téléphone portable 31 pour plaquer ledit téléphone portable 31 contre le fond 36 du logement de charge à induction 30.

En position ouverte, le dispositif de retenue 41 se situe à une distance de l'ordre de 10mm par rapport au fond 36 du logement de charge à induction 30 pour permettre une installation aisée du téléphone portable 31. En position fermée, la distance minimale entre la barre allongée 46 et le fond 36 du logement de charge à induction 30 est de 5mm de façon à pouvoir s'adapter à toutes les épaisseurs de téléphones portables. Ce dispositif de retenue 41 n'occupe que la bande latérale 47 du téléphone portable 31, ce qui permet l'utilisation du téléphone portable 31 lorsque ce dernier se trouve dans une phase de charge.

Afin d'installer son téléphone portable 31 à l'intérieur du logement de charge à induction 30, le passager tire le dispositif de retenue 41 vers lui, de façon à le faire pivoter autour de la charnière à ressort 45 pour écarter la plaque allongée 46 par rapport au fond 36 et faire ainsi passer le dispositif de retenue 41 dans la position ouverte. Le passager peut alors positionner son téléphone portable 31 entre le fond 36 du logement de charge à induction 30 et la plaque allongée 46. En relâchant le dispositif de retenue 41, la plaque allongée 46 vient automatiquement plaquer le téléphone portable 31 contre le fond 36 du logement de charge à induction 30 et donc contre le chargeur à induction 38 du fait de l'action du ressort de la charnière 45.

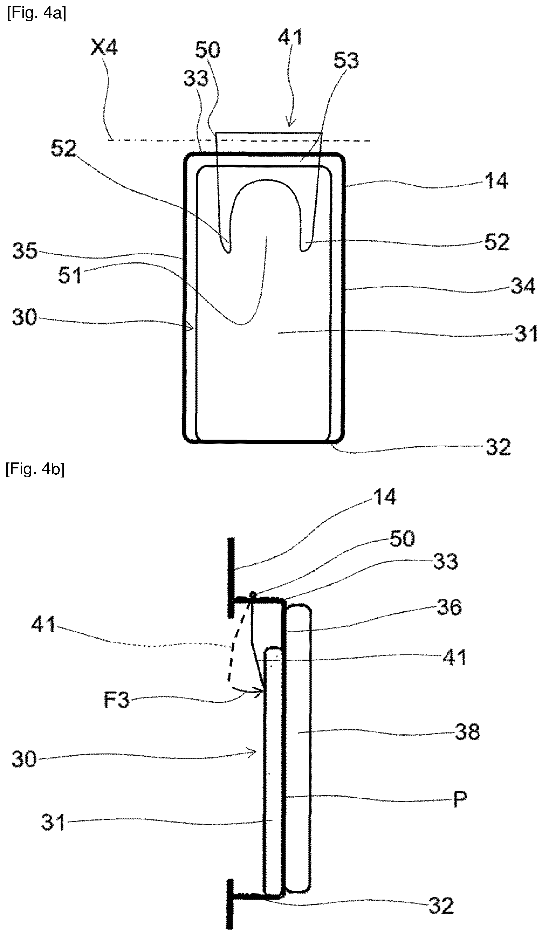

Dans un exemple non revendiqué illustré aux figures 4a et 4b, le dispositif de retenue 41 est mobile en rotation autour d'une charnière à ressort 50 ayant un axe horizontal X4. La charnière à ressort 50 est positionnée au-dessus ou à l'endroit de la face supérieure 33 du logement de charge à induction 30. La charnière à ressort 50 est décalée vers l'avant par rapport au plan P dans lequel s'étend le fond 36 du logement de charge à induction 30.

Le dispositif de retenue 41 pourra présenter une forme de plaque le cas échéant courbée ou pliée suivant une direction horizontale. Le dispositif de retenue 41 pourra comporter une échancrure centrale 51 de façon à définir deux branches 52 issues d'une base 53 de forme globalement rectangulaire liée mécaniquement à la charnière à ressort 50. Une telle configuration permet de minimiser la surface de plaquage correspondant à la surface cachée du téléphone portable 31 par le dispositif de retenue 41. Une telle configuration permet ainsi l'utilisation du téléphone portable 31 au cours de sa charge.

Le dispositif de retenue 41 est mobile entre une position ouverte dans laquelle le dispositif de retenue 41 est éloigné par rapport au fond 36 du logement de charge à induction 30 pour permettre une insertion du téléphone portable 31 dans l'espace s'étendant entre les branches du dispositif de retenue 41 et le fond 36 du logement de charge à induction 30 et une position fermée dans laquelle le dispositif de retenue 41 vient en appui, via les branches 52, contre le bord droit 31.3 et le bord gauche 31.4 du téléphone portable 31 pour plaquer ledit téléphone portable 31 contre le fond 36 du logement de charge à induction 30.

En position ouverte, il existe un écart compris entre 10mm et 30mm et valant de préférence de l'ordre de 20mm entre le dispositif de retenue 41 et le fond 36 du logement de charge à induction 30. En position fermée, l'écart minimal entre le dispositif de retenue 41 et le fond 36 du logement de charge à induction 30 est nul ou faible, notamment de l'ordre de 2mm.

Cette amplitude de déplacement du dispositif de retenue 41 permet de s'adapter aisément aux variation d'épaisseur des téléphones mobiles d'un modèle à l'autre. Avantageusement, la hauteur du dispositif de retenue 41 mesurée par rapport à la face supérieure 33 du logement 30 suivant une direction verticale est comprise entre 30mm et 60mm et vaut de l'ordre de 50mm, ce qui garantit son adaptation à de nombreux types de téléphones ayant des hauteurs différentes.

Afin d'installer son téléphone portable 31 à l'intérieur du logement de charge à induction 30, le passager tire le dispositif de retenue 41 vers lui, de façon à écarter le dispositif de retenue 41 par rapport au fond 36 pour faire passer le dispositif de retenue 41 dans une position ouverte. Le passager peut alors positionner son téléphone portable 31 entre le fond 36 du logement de charge à induction 30 et le dispositif de retenue 41. En relâchant le dispositif de retenue 41, ce dernier vient automatiquement plaquer suivant la flèche F3 (cf. figure 4b) le téléphone portable 31 contre le fond 36 du logement de charge à induction 30 et donc contre le chargeur à induction 38 du fait de l'action du ressort de la charnière 50.

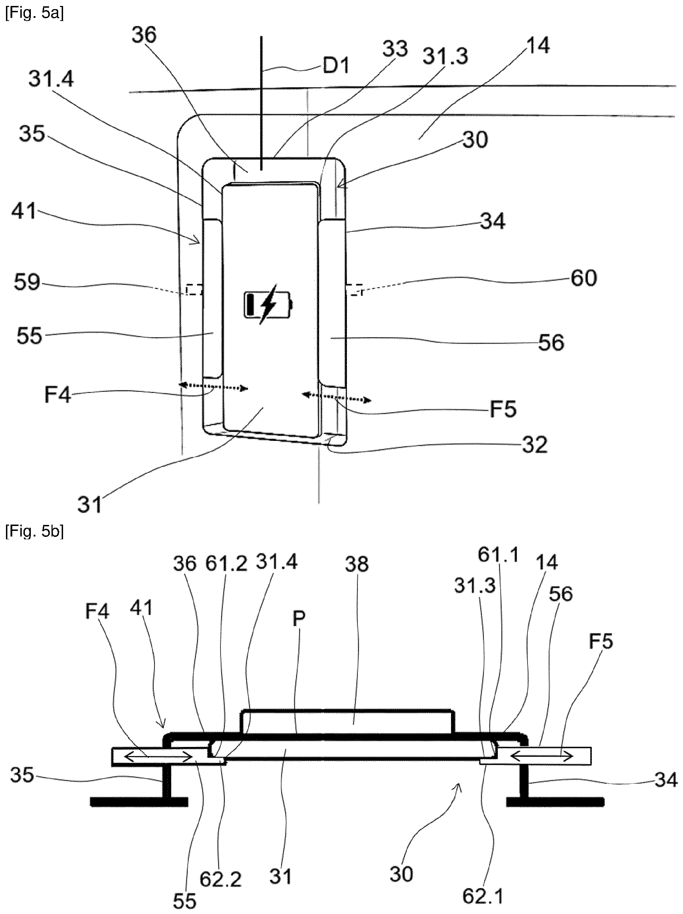

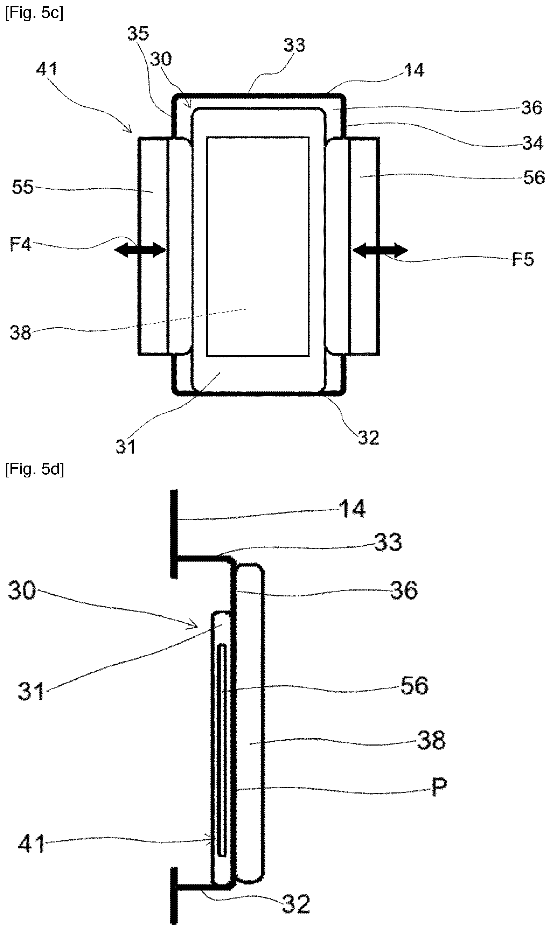

Dans un exemple non revendiqué illustré aux figures 5a, 5b, 5c, et 5d, le dispositif de retenue 41 comporte un premier élément de maintien latéral 55 s'étendant longitudinalement suivant la face latérale gauche 35 du logement de charge à induction 30 et un deuxième élément de maintien latéral 56 s'étendant longitudinalement suivant la face latérale droite 34 du logement de charge à induction 30. Le premier élément de maintien latéral 55 est destiné à venir en appui contre le bord gauche 31.4 du téléphone portable 31. Le deuxième élément de maintien latéral 56 est destiné à venir en appui contre le bord droit 31.3 du téléphone portable 31.

Le premier élément de maintien latéral 55 et le deuxième élément de maintien latéral 56 sont mobiles chacun en translation suivant une direction horizontale (cf. flèches F4 et F5) qui pourra correspondre à une direction transversale par rapport à la direction D1 d'allongement longitudinale du logement de charge à induction 30.

Un premier organe élastique 59, tel qu'un ressort, sollicite le premier élément de maintien latéral 55 en direction d'un centre du logement de charge à induction 30 et un deuxième organe élastique 60, tel qu'un ressort, sollicite le deuxième élément de maintien latéral 56 en direction du centre du logement de charge à induction 30. Le premier organe élastique 59 prend appui sur la face latérale 35 ou est disposé dans une cavité réalisée dans la face latérale 35 du logement 30. Le deuxième organe élastique 60 prend appui sur la face latérale 34 ou est disposé dans une cavité réalisée dans la face latérale 34 du logement 30.

Comme cela est visible sur la figure 5b, chaque élément de maintien latéral 55, 56 comporte une portion longitudinale 62.1, 62.2 apte à assurer une rétention du téléphone portable 31. La portion longitudinale 62.1 est destinée à venir en appui contre le bord droit 31.3 du téléphone portable 31 et la portion longitudinale 62.2 est destinée à venir en appui contre le bord gauche du téléphone portable 31. Les portions longitudinales 62.1, 62.1 pourront être obtenues par réalisation de creusures 61.1, 61.2 suivant l'épaisseur des éléments de maintien 55, 56. Les éléments de maintien 55, 56 présentent une forme de plaque s'étendant un plan parallèle au fond 36 du logement 30. Chaque élément de maintien 55, 56 est dépourvu de portion longitudinale du côté du fond 36 du logement 30 afin de garantir le contact du téléphone portable 31 contre le fond 36 du logement 30.

Le dispositif de retenue 41 est mobile entre une position ouverte dans laquelle le premier élément de maintien latéral 55 et le deuxième élément de maintien latéral 56 sont éloignés l'un de l'autre pour permettre une insertion du téléphone portable 31 dans l'espace s'étendant entre les éléments de maintien latéral 55, 56; et une position fermée dans laquelle le premier élément de maintien latéral 55 vient en appui contre le bord gauche 31.4 du téléphone portable 31 et le deuxième élément de maintien latéral 56 vient en appui contre le bord droit 31.3 du téléphone portable 31. Le téléphone portable 31 est alors maintenu serré entre le premier élément de maintien latéral 55 et le deuxième élément de maintien latéral 56, tout en étant plaqué contre le fond 36 du logement de charge à induction 30. Les ressorts 59, 60 ont tendance à solliciter le premier élément de maintien latéral 55 et le deuxième élément de maintien latéral 56 vers la position fermée.

En position fermée, l'écart minimum entre les deux éléments 55, 56 est compris entre 30mm et 50mm et vaut de préférence de l'ordre de 40mm. En position ouverte, l'écart maximum les deux éléments 55, 56 est compris entre 80mm et 120mm et vaut de préférence de l'ordre de 100mm.

Le premier élément de maintien latéral 55 et le deuxième élément de maintien latéral 56 sont de préférence centrés en hauteur par rapport au logement de charge à induction 30. Alternativement, le premier élément de maintien latéral 55 et le deuxième élément de maintien latéral 56 s'étendent chacun suivant toute la hauteur du logement de charge à induction 30.

Afin d'installer son téléphone portable 31 à l'intérieur du logement de charge à induction 30, le passager écarte le premier élément de maintien latéral 55 et le deuxième élément de maintien latéral 56 l'un de l'autre pour faire passer le dispositif de retenue 41 dans une position ouverte. Le passager peut alors positionner son téléphone portable 31 contre le fond 36 du logement de charge à induction 30 et le dispositif de retenue 41. En relâchant le dispositif de retenue 41, le premier élément de maintien latéral 55 et le deuxième élément de maintien latéral 56 viennent automatiquement se plaquer contre les bords opposés 31.3, 31.4 du téléphone portable 31 de façon à le maintenir contre le fond 36 du logement de charge à induction 30 et donc contre le chargeur à induction 38.

Bien entendu, les différentes caractéristiques, variantes et/ou formes de réalisation de la présente invention peuvent être associées les unes avec les autres selon diverses combinaisons dans la mesure où elles entrent dans le champ des revendications annexées.

En outre, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre des revendications annexées.

## Revendications

1. Unité de siège (10) pour un véhicule de transport comportant:
- un siège comprenant une assise et un dossier (12.2), et
- un logement de charge à induction (30) pour un appareil électronique portable (31),
- ledit logement de charge à induction (30) présentant une orientation verticale,
- ledit logement de charge à induction (30) comportant une face inférieure (32) contre laquelle est destiné à reposer une face inférieure de l'appareil électronique portable (31), une face supérieure (33), une face latérale droite (34), une face latérale gauche (35), et un fond de logement (36),
- un chargeur à induction (38) apte à générer un champ magnétique à l'intérieur du logement de charge à induction (30),
- un dispositif de retenue (41) étant configuré pour venir en appui contre au moins un bord de l'appareil électronique portable (31) pour que ledit appareil électronique portable (31) soit maintenu plaqué contre le fond (36) du logement de charge à induction (30)
- le dispositif de retenue (41) étant monté coulissant verticalement depuis la face supérieure (33) du logement de charge à induction (30) de façon à venir en appui contre un bord supérieur (31.1) de l'appareil électronique portable (31),
**caractérisée en ce que** le dispositif de retenue (41) est apte à coulisser à l'intérieur d'une ouverture réalisée à l'intérieur de la face supérieure (33) du logement de charge à induction (30).

2. Unité de siège selon la revendication 1, **caractérisée en ce que** le dispositif de retenue (41) présente une face arrière (42) destinée à venir en contact avec le bord supérieur (31.1) de l'appareil électronique portable (31) formant un angle non nul par rapport à un plan vertical.

## Patentansprüche

1. Sitzeinheit (10) für ein Transportfahrzeug mit:
- einem Sitz mit einer Sitzbasis und einer Rückenlehne (12.2), und
- einer Induktionsladeaufnahme (30) für ein tragbares elektronisches Gerät (31),
- wobei die Induktionsladeaufnahme (30) eine vertikaler Ausrichtung aufweist,
- wobei die Induktionsladeaufnahme (30) eine Unterseite (32), an der die Unterseite des tragbaren elektronischen Geräts (31) anliegen soll, eine Oberseite (33), eine rechte Seitenfläche (34), eine linke Seitenfläche (35) und einen Aufnahmeboden (36),
- einem Induktionsladegerät (38), das in der Lage ist, ein Magnetfeld im Inneren der Induktionsladeaufnahmes (30) zu erzeugen,
- wobei eine Haltevorrichtung (41) so konfiguriert ist, dass sie an mindestens einer Kante des tragbaren elektronischen Geräts (31) anliegt, sodass dieses tragbare elektronische Gerät (31) gegen den Boden (36) der Induktionsladeaufnahme (30) gedrückt wird.
- wobei die Haltevorrichtung (41) so montiert ist, dass sie von der Oberseite (33) de Induktionsladeaufnahme (30) vertikal verschoben werden kann und dabei an einer Oberkante (31.1) des tragbaren elektronischen Geräts (31) anliegt,
**dadurch gekennzeichnet, dass** die Haltevorrichtung (41) in eine Öffnung in der Oberseite (33) der Induktionsladeaufnahmes (30) eingeschoben werden kann.

2. Sitzeinheit nach Anspruch 1, **dadurch gekennzeichnet, dass** die Haltevorrichtung (41) eine Rückseite (42) aufweist, die mit der Oberkante (31.1) des tragbaren elektronischen Geräts (31) in Kontakt kommt und dabei einen von Null verschiedenen Winkel mit einer vertikalen Ebene bildet.

## Claims

1. A seat unit (10) for a transport vehicle comprising:
- a seat comprising a seating pan and a backrest (12.2), and
- an induction charging housing (30) for a portable electronic device (31),
- said induction charging housing (30) having a vertical orientation,
- said induction charging housing (30) comprising a lower face (32) against which a lower face of the portable electronic device (31) is intended to rest, an upper face (33), a right side face (34), a left side face (35), and a housing bottom (36),
- an induction charger (38) capable of generating a magnetic field inside the induction charging housing (30),
- a retaining device (41) being configured to bear against at least one edge of the portable electronic device (31) so that said portable electronic device (31) is held so as to press against the bottom (36) of the induction charging housing (30)
- the retaining device (41) being mounted so as to slide vertically from the upper face (33) of the induction charging housing (30) so as to bear against an upper edge (31.1) of the portable electronic device (31),
**characterized in that** the retaining device (41) is able to slide into an opening made in the upper face (33) of the induction charging housing (30).

2. The seat unit according to claim 1, **characterized in that** the retaining device (41) has a rear face (42) for coming into contact with the upper edge (31.1) of the portable electronic device (31), forming thereby a non-zero angle with a vertical plane.
